**Europäisches Patentamt**

**European Patent Office**

**Office européen des brevets**

(19)

(11) Veröffentlichungsnummer : **0 050 305**
**B1**

(12) # EUROPÄISCHE PATENTSCHRIFT

(45) Veröffentlichungstag der Patentschrift :
26.09.84

(21) Anmeldenummer : **81108304.7**

(22) Anmeldetag : **14.10.81**

(51) Int. Cl.³ : **G 06 F 3/04**, **B 66 B 1/18**

(54) **Einrichtung zur Steuerung des Zugriffes von Prozessoren auf eine Datenleitung.**

(30) Priorität : **20.10.80 CH 7797/80**

(43) Veröffentlichungstag der Anmeldung :
**28.04.82 Patentblatt 82/17**

(45) Bekanntmachung des Hinweises auf die Patenterteilung : **26.09.84 Patentblatt 84/39**

(84) Benannte Vertragsstaaten :
**AT BE DE FR IT NL**

(56) Entgegenhaltungen :
**EP-A- 0 007 185**
**GB-A- 2 022 299**
**US-A- 4 148 011**
**US-A- 4 161 779**

(73) Patentinhaber : **INVENTIO AG**
**Seestrasse 55**
**CH-6052 Hergiswil NW (CH)**

(72) Erfinder : **Friedli, Paul, Dr.**
**Bucheggstrasse 172**
**CH-8057 Zürich (CH)**
Erfinder : **Süss, Hans Gerhard**
**Chriesimatt**
**CH-6044 Udligenswil (CH)**

**Beschreibung**

Die Erfindung betrifft eine Einrichtung zur Steuerung des Zugriffes von Prozessoren auf eine Datenleitung, wobei die Prozessoren über Ein-Ausgabe-Interfacebausteine an der Datenleitung angeschlossen sind und jeder Ein-Ausgabe-Interfacebaustein einen eine Zugriffsanforderung des zugeordneten Prozessors ausgebenden Anschluss aufweist, und wobei ein erster, mindestens eine vorhandene Zugriffsanforderung signalisierender Leiter sowie ein zweiter, einen erfolgten Zugriff auf die Datenleitung signalisierender Leiter vorgesehen sind.

Mit der DE-A1-28 24 557 ist eine Einrichtung für die Steuerung des Zugriffes von Mikroprozessoren auf einen gemeinsamen Systembus bekannt geworden. Hierbei besitzen die einen HOLD-Eingang und einen HOLDA-Ausgang aufweisenden Mikroprozessoren eine Logik, mittels welcher der Zugriff zum Systembus gesteuert werden kann. Bevor der Zugriff freigegeben wird, muss ein Bus-Anforderungszyklus in Form einer Signalsequenz durchgeführt werden, welche im wesentlichen aus einem Anforderungssignal BUSREQ an einen als Master arbeitenden Prozessor und einem Quittungssignal HOLDA dieses Masters an den Anforderer besteht. Erst wenn die Quittung vorliegt, darf der Anforderer den Bus für einen oder mehrere Zugriffe belegen. Um den Bus-Anforderungszyklus durchzuführen, sind die Mikroprozessoren nach dem Master-Slave-Prinzip derart zusammengeschaldet, dass die Anforderungsausgänge BUSREQ der Slave-Prozessoren über ein ODER-Glied mit dem HOLD-Eingang des Master-Prozessors und dessen Quittungsausgang HOLDA mit einem Quittungseingang BPRI des nächstfolgenden Slave-Prozessors verbunden ist. Die Slave-Prozessoren sind untereinander derart gekoppelt, dass jeweils ein Quittungsausgang BPRO eines vorangehenden mit einem Quittungseingang BPRI eines nachfolgenden Slave-Prozessors verbunden ist.

Mit dieser Einrichtung wird die Priorität der einzelnen Mikroprozessoren festgelegt, so dass bei gleichzeitigem Zugriff mehrerer Prozessoren jeweils der dem Master-Prozessor am nächsten liegende auf den Bus zugreifen kann. Die Nachteile vorstehender Einrichtung sind jedoch darin zu sehen, dass zusätzlich zu den Daten- und Steuerleitungen des Systembusses noch weitere Leiter für die Durchführung des Bus-Anforderungszyklus erforderlich sind, wobei mit zunehmender Anzahl Mikroprozessoren auch die Anzahl der Anforderungsleiter BUSREQ steigt. Als nachteilig kann ebenfalls angesehen werden, dass mit zunehmender Anzahl Prozessoren die Buszuteilung zu zeitaufwendig wird, da die einzelnen Prozessoren bei der Quittungsfortschaltung zeitlich nacheinander abgetastet werden, um festzustellen, welcher Prozessor der Anforderer ist.

Bei einer Einrichtung nach der EP-A 7 185 sind mehrere Computer zwecks Datenübertragung in eine zentrale Aufnahmeeinrichtung mit einer bidirektionalen Leitung verbunden. Um den gleichzeitigen Zugriff der Computer auf die Leitung zu verhindern, ist jedem Computer eine Prioritätsnummer zugeordnet, die durch die Schaltstellungen eines Mehrfachschalters gegeben ist. Wenn die Computer Daten zur zentralen Aufnahmeeinrichtung senden wollen, überwachen sie die bidirektionale Leitung. Wird die Leitung frei, so liest jeder Computer die durch den zugeordneten Mehrfachschalter gegebene Prioritätsnummer, die danach in eine den Sendezeitpunkt aufschiebende, proportionale Zeitverzögerung umgewandelt wird. Während dieser Zeitverzögerung tastet jeder Computer die Leitung ab, um festzustellen, ob sie immer noch frei ist. Nach Ablauf der kürzesten Zeitverzögerung kann der betreffende Computer die Leitung benutzen, während die Computer mit den längeren Zeitverzögerungen feststellen, dass die Leitung wieder besetzt ist. Diese Computer löschen ihre bereits ermittelte Zeitverzögerung und warten bis die Leitung wieder frei ist.

Bei dieser Einrichtung wird der Zugriff auf die Datenleitung durch die Computer gesteuert. Das erfordert einen relativ grossen Softwareaufwand und entsprechend viel Computerzeit. Auch die Bildung der der Prioritätsnummer entsprechenden Verzögerung erfolgt computerintern, wodurch zusätzliche Zeitverluste verursacht werden.

In der US-Patentschrift US-A-4 161 779 wird ein Prioritätssystem beschrieben, bei dem mehrere computergesteuerte Terminals an einer Datenleitung angeschlossen sind. Jedes Terminal weist zwecks Abklärung der Zugriffspriorität zwei Zähler auf und besitzt eine Speicher, dessen Daten in eine gemeinsam benutzte Einrichtung, z. B. einen Drucker, transferiert werden sollen. Bei einer Zugriffsanforderung eines bestimmten Terminals wird dessen erster Zähler auf Null gesetzt und gestartet. Gleichzeitig beginnen auch die ersten Zähler der anderen Terminals zu zählen, wobei diese Zähler bereits Zählerstände, herrührend von nicht stattgegebenen Zugriffsanforderungen, aufweisen können. Wird die Datenleitung frei, so wird der Zählerstand der ersten Zähler auf die zweiten Zähler übertragen, wobei diese gleichzeitig gestartet werden. Es wird nun jeweils derjenige zweite Zähler zuerst einen maximalen Zählerstand erreichen, in welchen der grösste Anfangszählerstand geladen wurde. Dieser zweite Zähler erzeugt ein Freigabesignal, worauf der Speicher des betreffenden Terminals seine Daten auf die Datenleitung überträgt. Der Zählvorgang der übrigen Zähler wird daraufhin abgebrochen und der Anfangszählerstand in die ersten Zähler zurückgeladen. Auf diese Weise wird erreicht, dass jeweils dem Terminal mit der ältesten Zugriffsanforderung die Datenleitung zugeteilt wird.

Als nachteilig kann bei diesem Prioritätsystem angesehen werden, dass für die Realisation der nötigen Einrichtungen ein relativ grosser Hard- und Softwareaufwand erforderlich ist. Ausserdem kann es bei Einrichtungen, bei welchen mehrere Zugriffsanforderungen gleichzeitig auftreten können, nicht angewendet werden.

Mittels einer Prioritätseinrichtung nach der US-Patentschrift US-A-4 148 011 kann der Zugriff mehrere Masterprozessoren auf einen gemeinsamen Bus konfliktlos gesteuert werden. Zu diesem Zweck sind den Masterprozessoren Prioritätsschaltkreise zugeordnet, die mittels eines Prioritätsleiters in Serie geschaltet sind. Hierbei ist dem Masterprozessor des ersten Prioritätsschaltkreises der Serieschaltung die erste Priorität zugeordnet. Die Prioritätsschaltkreise sind ausserdem mit zwei weiteren Leitern verbunden, wovon der erste signalisiert, dass eine oder mehrere Zugriffsanforderungen vorhanden sind, und der zweite signalisiert, dass der Bus besetzt ist. Wird der erste Leiter durch eine oder mehrere Zugriffsanforderungen aktiviert, so tritt auf dem Prioritätsleiter ein Prioritätssignal auf, das in demjenigen Prioritätsschaltkreis unterbrochen wird, der eine Zugriffsanforderung aufweist und welcher dem ersten Prioritätsschaltkreis am nächsten liegt. Wenn der zweite Leiter signalisiert, dass der Bus nicht mehr besetzt ist, kann der zugeordnete Masterprozessor Daten über den Bus transferieren. In diesem Fall wird die betreffende Zugriffsanforderung gelöscht und über den zweiten Leiter signalisiert, dass der Bus wieder besetzt ist. Gleichzeitig wird das Prioritätssignal bis zum nächsten, eine Zugriffsanforderung aufweisen den Prioritätsschaltkreis weitergeleitet.

Bei dieser Prioritätseinrichtung erfolgt die Buszuteilung bei gleichzeitig vorhandenen Zugriffsanforderungen ebenfalls nach einer von vornherein festliegenden Prioritätsreihenfolge. Die vorgeschlagene Lösung benötigt drei Leiter und Prioritätsschaltkreise die relativ kompliziert aufgebaut sind.

Der Erfindung liegt die Aufgabe zugrunde, eine gegenüber der vorstehend beschriebenen verbesserte Einrichtung zur Steuerung des Zugriffes von Mikroprozessoren auf eine Datenleitung vorzuschlagen, welche weniger Leiter aufweist, einfacher aufgebaut ist und die Prozessoren für die Prioritätssteuerung weniger belastet. Diese Aufgabe wird durch die in den Ansprüchen gekennzeichnete Erfindung gelöst. Hierbei wird während einer ersten Phase ein erster Leiter demjenigen Prozessor zugeteilt, welcher als erster eine Zugriffsanforderung aussendet, und während einer zweiten Phase eine prozessorspezifische in einem Zähler gespeicherte Binärzahl durch Zählen bis zum höchsten Zählerstand in eine Verzögerung eines Prioritätssignals umgewandelt und dieses Signal auf einen zweiten Leiter gebracht, wodurch bei gleichzeitig eintreffenden Zugriffsanforderungen mehrerer Prozessoren der zweite Leiter demjenigen Prozessor zugeteilt wird, dessen Prioritätssignal die kleinste Verzögerung aufweist und der damit Priorität für den Zugriff auf die Datenleitung besitzt, wobei in einer dritten Phase der eigentliche Datentransfer durchgeführt wird.

Die mit der Erfindung erzielten Vorteile sind im wesentlichen darin zu sehen, dass bei Anwendung serieller Uebertragungstechnik und beliebig vielen Teilnehmern insgesamt nur drei Leiter benötigt werden, und zwar zwei Leiter für die konfliktlose Steuerung des Buszugriffes und ein Leiter für den seriellen Datentransfer. Ein zusätzlicher Vorteil ergibt sich daraus, dass für die zur Steuerung des Zugriffes erforderliche zusätzliche Logik standardisierte serielle Interface-Bausteine verwendet werden, welche mit relativ kleinem Aufwand entsprechend modifiziert und ergänzt sind.

Auf beiliegender Zeichnung ist ein Ausführungsbeispiel der Erfinddung dargestellt, das im folgenden näher erläutert wird. Es zeigen :

Figur 1 ein Blockschema der erfindungsgemässen Einrichtung,

Figur 2 einen Logik-Schaltkreis der Einrichtung gemäss Fig. 1,

Figur 3 ein Diagramm des zeitlichen Verlaufes der Signale der Ein- und Ausgänge des Logik-Schaltkreises und der damit verbundenen Leiter während eines Anforderungszyklus,

Figur 4 ein Diagramm des zeitlichen Verlaufes der Signale der Prioritätsein- und -ausgänge sowie des Prioritätsleiters bei zwei gleichzeitig auftretenden Zugriffsanforderungen.

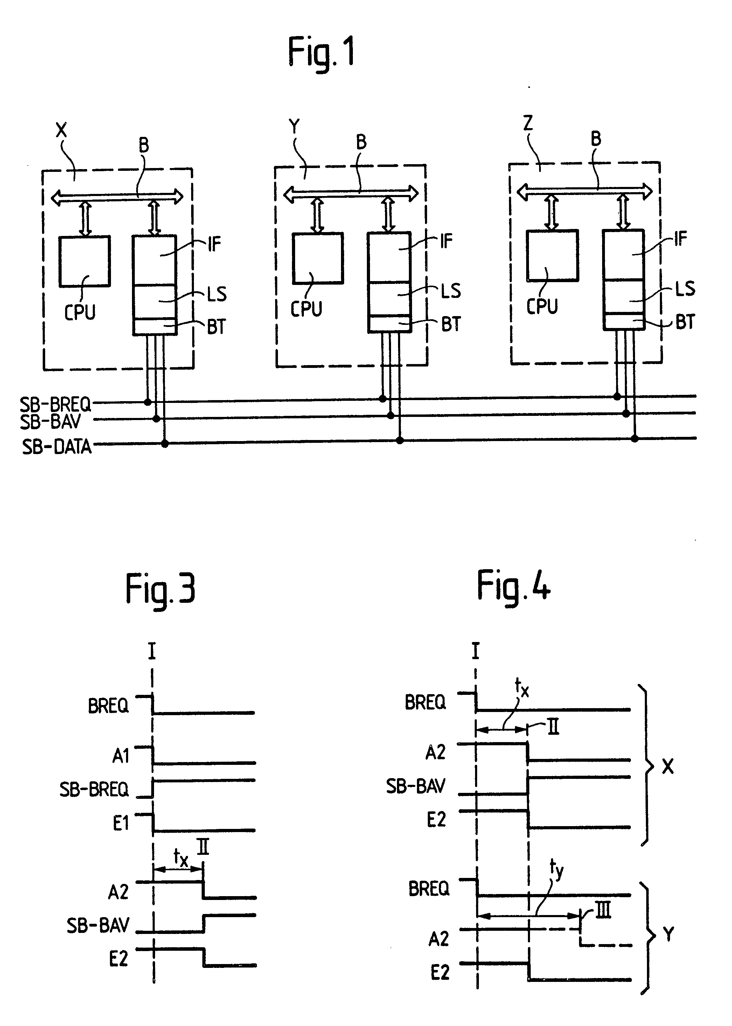

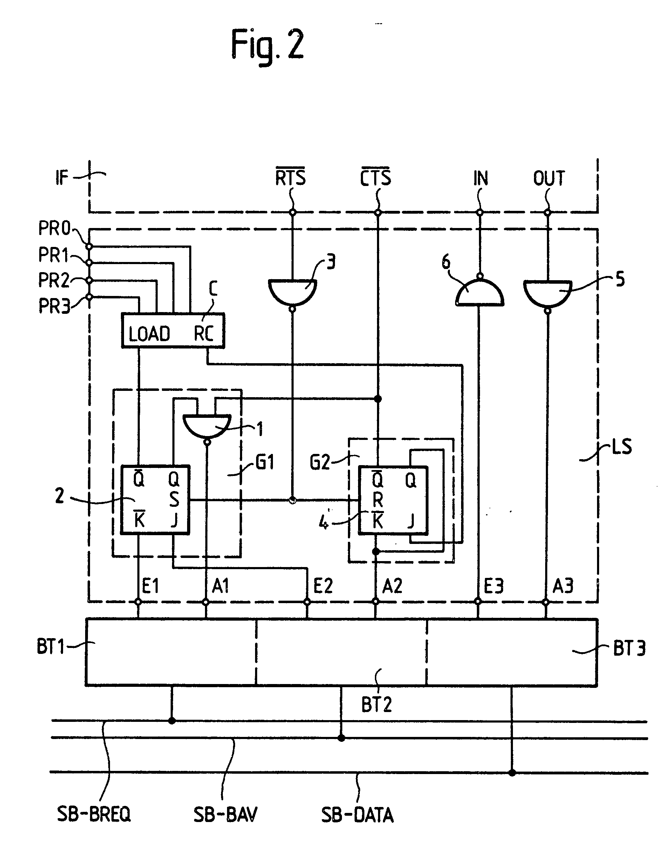

In der Fig. 1 sind X, Y und Z drei voneinander unabhängige Mikrocomputersysteme bezeichnet. Die Mikroprozessoren CPU der Systeme X, Y und Z sind in bekannter Weise über einen aus Adressen-, Daten- und Steuerleitungen bestehenden Bus B mit nicht weiter dargestellten, dem jeweiligen System zugeordneten Schreib-Lesespeichern, Festwertspeichern und Ein-Ausgabe-Bausteinen verbunden. Jedes System X, Y, Z ist über eine aus einem seriellen Interfacebaustein IF, einem Logik-Schaltkreis LS und Bustreibern BT bestehende Ankopplung an einem Datenleiter SB-DATA sowie an einem ersten und einem zweiten, der Bestimmung der Zugriffspriorität dienenden Leiter SB-BREQ, SB-BAV angeschlossen.

Nach der Fig. 2 besitzt der Logik-Schaltkreis LS einen über einen ersten Bustreiber BT1 mit dem ersten Leiter SB-BREQ verbundenen Anforderungsausgang A1, einen über einen zweiten Bustreiber BT2 mit dem zweiten Leiter SB-BAV verbundenen Prioritätsausgang A2 und einen über einen dritten Bustreiber BT3 mit dem Datenleiter SB-Data verbundenen Datenausgang A3. Mit E1, E2 und E3 sind drei, mit den Bustreibern BT1, BT2 und BT3 verbundene und über diese den Signalzustand des jeweiligen Leiters SB-BREQ, SB-BAV und SB-DATA lesende Eingänge bezeichnet. Ein Zähler C weist vier parallele Eingänge PR0, PR1, PR2, PR3 auf, die mit einem nicht dargestellten, dem jeweiligen Mikrocomputersystem X, Y, Z zugeordneten parallelen Interfacebaustein verbunden sind, und über welche eine die Priorität des betreffenden Mikroprozessors CPU ausdrückende Binärzahl ladbar ist. Eine erste Gatteranordnung G1 besteht aus einem NAND-Glied 1 und einem JK-Flip-Flop 2, wobei dessen Eingänge $\bar{K}$, J mit den Leseeingängen E1, E2 verbunden sind und dessen Ausgang Q mit einem Eingang des NAND-Gliedes 1 in Verbindung steht sowie dessen Ausgang $\bar{Q}$ an einem Inkrementieranschluss LOAD des Zählers C angeschlossen ist. Der Eingang S des JK-Flip-Flops 2 steht über ein NICHT-Glied 3 mit einem eine Zugriffsanforderung BREQ ausgebenden Anschluss $\overline{RTS}$ des seriellen Interfacebausteins IF in Verbindung. Der Ausgang des NAND-Gliedes 1 ist mit dem die Zugruffisanforderung BREQ weiterleitenden Anforderungsausgang A1 verbunden. Eine zweite Gatteranordnung G2 besteht aus einem weiteren JK-Flip-Flop 4, dessen Eingang J mit einem Übertragsanschluss RC des Zählers C verbunden ist und dessen Eingang $\bar{K}$ und Ausgang Q miteinander verbunden und am Prioritätsausgang A2 angeschlossen sind. Der Ausgang $\bar{Q}$ des weiteren JK-Flip-Flops 4 ist mit einem die Verfügbarkeit der Datenleitung SB-DATA signalisierenden Eingang $\overline{CTS}$ des seriellen Interfacebausteins IF und einem weiteren Eingang des NAND-Gliedes 1 verbunden. Der Eingang R des weiteren JK-Flip-Flops 4 steht mit dem Eingang S des JK-Flip-Flops 2 der ersten Gatteranordnung G1 in Verbindung. Der Datenausgang A3 und der Dateneingang E3 sind über je ein NICHT-Glied 5, 6 mit einem Datenausgang OUT und einem Dateneingang IN des seriellen Interfacebausteins IF verbunden.

Die für das in den Logik-Schaltkreis LS einzuführende Taktsignal erforderlichen Anschlüsse und Verbindungen sind nicht dargestellt. Die Bustreiber BT1-BT3 sowie der serielle Interfacebaustein sind im Handel erhältliche Komponenten, beispielsweise solche vom Typ SN 75138 beziehungsweise TMS 9902 von Texas Instruments.

Die vorstehend beschriebene Einrichtung arbeitet wie folgt:

Bei einem Zugriff beispielsweise des Prozessors des Mikrocomputersystems X auf den Datenleiter SB-DATA, wird der dazugehörige serielle Interfacebaustein IF angesteuert und eine Zugriffsanforderung BREQ über den Anschluss $\overline{RTS}$ und die erste Gatteranordnung G1 an den Anforderungsausgang 1A gesendet. Ist der Datenleiter SB-DATA frei, was beispielsweise durch niederes Potential des ersten und zweiten Leiters SB-BREQ, SB-BAV und hohes Potential des ersten und zweiten Leseeinganges E1, E2 gekennzeichnet sein möge, so werden über den ersten Bustreiber BT1 der erste Leiter SB-BREQ auf hohes und die ersten Leseeingänge E1 aller Systeme X, Y, Z auf niederes Potential gesetzt (Zeitpunkt I, Fig. 3), was zur Folge hat, dass über die erste Gatteranordnung G1 ein Inkrementiervorgang des Zählers C des Systems X ausgelöst wird. Nach einer Zeit $t_x$ hat der Zähler C den Inkrementiervorgang beendet, wobei ein Übertrag erzeugt und das Potential des Prioritätsausganges A2 über die zweite Gatteranordnung G2 niedrig gesetzt wird (Zeitpunkt II, Fig. 3). Gleichzeitig werden damit über den zweiten Bustreiber BT2 der zweite Leiter SB-BAV auf hohes und alle Leseeingänge E2 auf niederes Potential gebracht. Mit der Erzeugung des Übertrages beim Zähler C des Systems X wird ausserdem über die zweite Gatteranordnung G2 am Eingang $\overline{CTS}$ des seriellen Interfacebausteins IF ein die Verfügbarkeit des Datenleiters SB-DATA anzeigender Signalwechsel hervorgerufen. Bei den übrigen Systemen, Y, Z kann dieser Signalwechsel nicht stattfinden, da bei niedrig gesetzten Lese eingängen E2 ein Inkrementieren der Zähler C und somit das Erzeugen eines Übertrages nicht möglich ist. Die nun über die Datenausgänge OUT und A3 seriell zu übertragenden Informationen des Systems X sind beispielsweise Ein- oder Mehr-Byte Telegramme, welche aus Adressen- und Datenbits zusammengesetzt sind. Das jeweilige adressierte System wird in bekannter, nicht weiter beschriebener Weise die über die Dateneingänge E3 und IN empfangenen Informationen indentifizieren und vom seriellen Interfacebaustein IF in einen Schreib-Lesespeicher transferieren.

Bei gleichzeitigem Zugriff, beispielsweise der Systeme X und Y auf den Datenleiter SB-DATA, wird der Inkrementiervorgang der betreffenden Zähler C gleichzeitig über die ersten Gatteranordnungen G1 gestartet (Zeitpunkt I, Fig. 4). Es sei nun angenommen, dass das System X gegenüber den Systemen Y, Z Priorität hat, der entsprechende Zähler C also die grösste Binärzahl enthält. Dieser Zähler C wird daher nach der Zeit $t_x$ den Inkrementiervorgang unter Erzeugung eines Übertrages zuerst beenden, wobei das Potential des Prioritätsausganges A2 über die zweite Gatteranordnung G2 niedrig gesetzt wird (Zeitpunkt II, Fig. 4). Gleichzeitig werden damit über den zweiten Bustreiber BT2 der zweite Leiter SB-BAV auf hohes und alle Leseeingänge E2 auf niederes Potential gebracht, so dass der Inkrementiervorgang des Zählers C von System Y noch vor Erreichen des Übertrages über die erste Gatteranordnung G1 gestoppt wird, wobei der Übertrag erst nach einer der kleineren Binährzahl entsprechenden Zeit $t_y$ erzeugbar wäre (Zeitpunkt III, Fig. 4). Bei nicht erfolgtem Übertrag kann daher auch kein die Verfügbarkeit des Datenleiters SB-DATA anzeigender Signalwechsel am Eingang $\overline{CTS}$ des betreffenden seriellen Interfacebausteins IF stattfinden.

## Ansprüche

1. Einrichtung zur Steuerung des Zugriffes von Prozessoren auf eine Datenleitung, wobei die Prozessoren (CPU) über Ein-Ausgabe-Interfacebausteine (IF) an der Datenleitung (SB-DATA) angeschlossen sind und jeder Ein-Ausgabe-Interfacebaustein (IF) einen eine Zugriffsanforderung (BREQ) des zugeordneten Prozessors (CPU) ausgebenden Anschluss ($\overline{RTS}$) aufweist, und wobei ein erster, mindestens eine vorhandene Zugriffsanforderung (BREQ) signalisierender Leiter (SB- BREQ) sowie ein zweiter, einen erfolgten Zugriff auf die Datenleitung (SB-DATA) signalisierender Leiter (SB-BAV) vorgesehen sind, dadurch gekennzeichnet,

— dass der Ein-Ausgabe-Interfacebaustein (IF) mit einem Logik-Schaltkreis (LS) verbunden ist, welcher einen die Zugriffsanforderung (BREQ) ausgebenden ersten Ausgang (A1) und einen eine Priorität bezüglich des Zugriffes des jeweiligen Prozessors (CPU) signalisierenden zweiten Ausgang (A2) aufweist,

— dass der logische Schaltkreis (LS) zwecks Bestimmung der Priorität wie an sich bekannt einen Zähler (C) aufweist, wobei jedem Prozessor (CPU) durch eine im Zähler (C) gespeicherte Binärzahl eine Priorität fest zugeordnet ist,

— dass die Anforderungsausgänge (A1) der Logik-Schaltkreise (LS) über je einen ersten Bustreiber (BT1) mit dem ersten Leiter (SB-BREQ) und die Prioritätsausgänge (A2) der Logik-Schalt- kreise (LS) über je einen zweiten Bustreiber (BT2) mit dem zweiten Leiter (SB-BAV) verbunden sind,

— dass der Logik-Schaltkreis (LS) einem mit dem ersten Bustreiber (BT1) verbundenen und über diesen den Signalzustand des ersten Leiters (SB-BREQ) lesenden ersten Eingang (E1) und einen mit dem zweiten Bustreiber (BT2) verbundenen und über diesen den Signalzustand des zweiten Leiters (SB-BAV) lesenden zweiten Eingang (E2) aufweist, und

— dass während einer ersten Phase der erste Leiter (SB-BREQ) demjenigen Prozessor (CPU) zugeteilt wird, welcher als erster eine Zugriffsanforderung (BREQ) aussendet, und während einer zweiten Phase die prozessorspezifische, im Zähler (C) gespeicherte Binärzahl, wie an sich bekannt, durch Zählen bis zum höchsten Zählerstand in eine Verzögerung eines Prioritätsignals umgewandelt und dieses Signal auf den zweiten Leiter (SB-BAV) gebracht wird,

— wodurch bei gleichzeitig eintreffenden Zu- griffsanforderungen (BREQ) mehrerer Prozesso- ren (CPU) der zweite Leiter (SB-BAV) demjenigen Prozessor (CPU) zugeteilt wird, dessen Prioritätssignal die kleinste Verzögerung aufweist und der damit Priorität für den Zugriff auf die Datenleitung (SB-DATA) besitzt, und

— wobei in einer dritten Phase der eigentliche Datentransfer durchgeführt wird.

2. Einrichtung nach Anspruch 1, dadurch gekennzeichnet, dass die Datenleitung aus einem Leiter (SB-DATA) besteht, der über einen dritten Bustreiber (BT3) an einem Dateneingang (E3) und einem Datenausgang (A3) des Logik-Schaltkreises (LS) angeschlossen ist, wobei der Dateneingang (E3) mit einem Eingang (IN) und der Datenausgang (A3) mit einem Ausgang (OUT) des Ein- Ausgabe-Interfacebausteines (IF) in Form eines seriellen Interfacebausteines verbunden sind.

3. Einrichtung nach einem der Ansprüche 1 oder 2, dadurch gekennzeichnet,

— dass der Logik-Schaltkreis (LS) eine erste Gatteranordnung (G1) aufweist, über welche der Anforderungsausgang (A1) mit dem die Zugriffsanforderung (BREQ) ausgebenden Anschluss (RTS) des seriellen Interfacebausteines (IF) und der erste Leseeingang (E1) mit einem Inkrementieranschluss (LOAD) des Zählers (C) verbunden sind, wobei bei Eintreffen einer oder gelichzeitig mehrerer Zugriffsanforderungen (BREQ) ein Signalwechsel des ersten Leiters (SB- BREQ) und der ersten Leseeingänge (E1) stattfindet und er betreffende Zähler (C) allein oder gleichzeitig mit den Zählern in weiteren Logik- Schaltkreisen inkrementiert wird,

— dass der Logik-Schaltkreis (LS) eine zweite Gatteranordnung (G2) aufweist, über welche ein Übertragsanschluss (RC) des Zählers (C) mit dem Prioritätsausgang (A2) verbunden ist, wobei beim Übertrag des die grösste Binärzahl aufweisenden Zählers (C) ein Signalwechsel des mit dem betreffenden Zähler (C) verbundenen Prioritätsausganges (A2), des zweiten Leiters (SB-BAV) und der zweiten Leseeingänge (E2) stattfindet,

— dass der zweite Leseeingang (E2) über die erste Gatteranordnung (G1) mit dem Inkrementieranschluss (LOAD) des Zählers (C) verbunden ist, wobei beim Signalwechsel des zweiten Leseeinganges (E2) das Inkrementieren des im Vergleich zu anderen Zählern eine kleinere Binärzahl aufweisenden Zählers (C) vor Erreichen des Übertrags unterbrochen wird, und

— dass der Übertragsanschluss (RC) des Zählers (C) über die zweite Gatteranordnung (G2) mit einem die Verfügbarkeit der Datenleitung (SB-DATA) signalisierenden Eingang (CTS) des seriellen Interface-Bausteines (IF) verbunden ist, wobei bei einem durch eine Zugriffsanforderung (BREQ) hervorgerufenen Signalwechsel des ersten und zweiten Leiters (SB-BREQ, SB-BAV) der Zugriff zur Datenleitung (SB-DATA) über den Datenausgang (A3) freigegeben wird.

## Claims

1. Unit to control the access of processors to a data bus, wherein the processors (CPU) are connected to the data bus (SB-DATA) by means of input-output interface modules (IF) and each input-output interface module (IF) contains an output (RTS) delivering an access request (BREQ) of the respective processor (CPU), and wherein are provided a first line (SB-BREQ), signalling the existence of a least one access request (BREQ) as well as a second line (SB- BAV), signalling the effected access to the data bus (SB-DATA), characterised thereby,

— that the input-output interface module (IF) is connected to a logic circuitry (LS), which contains a first output (A1) issuing the access request (BREQ) and a second output (A2), signalling a priority of the access of the respective processor (CPU),

— that the logic circuitry (LS) contains a counter (C) to determine, as is known, the priority, wherein each processor (CPU) has a firmly allocated priority given by a binary figure memorised in the counter (C),

— that the request outputs (A1) of the logic circuitry (LS) are individually connected to the first line (SB-BREQ) through a first bus-driver (BT1) and the priority outputs (A2) of the logic circuitry (LS) to the second line (SB-BAV) through a second bus driver (BT2).

— that the logic circuitry (LS) contains a first input (E1), connected to the first bus-driver (BT1), through which the signal status of the first line (SB-BREQ) is read and a second input (E2), connected to the second bus-driver (BT2) through which the signal status of the second line (SB-BAV) is read, and

— that during a first phase the first line (SB-BREQ) is allocated to that processor (CPU), which emits as the first one an access request (BREQ) and that during a second phase the binary figure specific to each processor and memorised in the counter (C) is converted, as is known, into a delay of a priority signal by counting up to the maximum count and that this signal is fed to the second line (SB-BAV),

— whereby at the event of simultaneous access requests (BREQ) of different processors (CPU) the second line (SB-BAV) is assigned to the processor (CPU) having a priority signal with the minimum delay and which therefore has the priority for the access to the data bus (SB-DATA), and

— where in a third phase the actual data transfer is accomplished.

2. Unit according to claim 1, characterised thereby, that the data bus consists of a line (SB-DATA), which is connected through a third bus driver (BT3) to a data input (E3) and a data output (A3) of the logic circuitry (LS), wherein the data input (E3) is connected to an input (IN) and the data output (A3) is connected to an output (OUT) of the input-output interface module (IF) in the form of a serial interface module.

3. Unit according to claims 1 or 2, characterised thereby,

— that the logic circuitry (LS) contains a first gate system (G1), through which the request output (A1) is connected to the output ($\overline{RTS}$), producing the access request (BREQ), of the serial interface module (IF) and the first read-input (E1) to an incremental port (LOAD) of the counter (C), wherein at the event of one or several simultaneous access requests (BREQ) a signal change of the first line (SB-BREQ) and of the first read-inputs (E1) occurs and where the respective counter (C) alone or simultaneously with the counters in additional logic-circuits is incremented,

— that the logic circuitry (LS) contains a second gate system (G2), through which a carryover port (RC) of the counter (C) is connected to the priority output (A2), wherein, at the carryover of the counter (C) having the maximum binary figure, a signal change of the priority output (A2) connected to the respective counter (C), of the second line (SB-BAV) and of the second read inputs (E2) takes place,

— that the second read input (E2) is connected through the first gate system (G1) to the incremental port (LOAD) of the counter (C), wherein at a signal change of the second read input (E2) the incrementing of the counter (C) having a smaller binary figure compared to other counters is interrupted before reaching the carryover, and

— that the carryover port (RC) of the counter (C) is connected through the second gate system (G2) to an input ($\overline{CTS}$) of the serial interface component (IF), signalling the availability of the data bus (SB-DATA), wherein at a signal change produced by an access request (BREQ), of the first and second line (SB-BREQ, SB-BAV) the access to the data bus (SB-DATA) through the data output (A3) is released.

## Revendications

1. Dispositif destiné à la commande de l'accès de processeurs à une ligne de données, dans lequel les processeurs (CPU) sont reliés à une ligne de données (SB-DATA) par l'intermédiaire d'un composant d'interface d'entrée/sortie (IF), chaque composant d'interface d'entrée/sortie (IF) possédant une borne ($\overline{RTS}$) émettant une requête d'accès (BREQ) du processeur associé (CPU), et dans lequel sont prévues une première ligne (SB-BREQ) signalant au moins une requête d'accès (BREQ) existante ainsi qu'une seconde ligne (SB-BAV) signalant la réalisation de l'accès à la ligne de données (SB-DATA), caractérisé en ce que :

— le composant d'interface d'entrée/sortie (IF) est connecté à un circuit logique (LS) qui comporte une première sortie (A1) émettant la requête d'accès (BREQ) et une seconde sortie (A2) signalant une priorité relative à l'accès du processeur associé (CPU) ;

— le circuit logique (LS) comporte un compteur (C), en soi déjà connu, pour déterminer la priorité, une priorité étant assignée de manière fixe à chaque processeur (CPU) par un nombre binaire mémorisé dans le compteur (C) ;

— les sorties de requête (A1) des circuits logiques (LS) sont connectées à la première ligne (SB-BREQ) chacune par un premier contrôleur de bus (BT1) et les sorties de priorité (A2) des circuits logiques (LS) sont connectées à la seconde ligne (SB-BAV) chacune par un second contrôleur de bus (BT2) ;

— le circuit logique (LS) comporte une première entrée (E1) reliée avec le premier contrôleur de bus (BT1) et lisant l'état du signal de la première ligne (SB-BREQ) par l'intermédiaire de ce dernier, et une seconde entrée (E2) reliée avec le second contrôleur de bus (BT2) et lisant l'état du signal de la seconde ligne (SB-BAV) par l'intermédiaire de ce dernier ; et

— la première ligne (SB-BREQ) est attribuée, pendant une première phase, au processeur (CPU) qui émet le premier une requête d'accès (BREQ), et, pendant une seconde phase, le nombre binaire spécifique du processeur et mémorisé dans le compteur (C) est converti, selon un mode connu en lui-même, en une temporisation d'un signal de priorité par comptage jusqu'au chiffre maximum de ce compteur, et ce signal étant appliqué ensuite à la seconde ligne (SB-BAV), de façon à ce que, en cas d'arrivée simultanée de requêtes d'accès (BREQ) de plusieurs processeurs (CPU), la seconde ligne (SB-BAV) soit attribuée au processeur (CPU) dont le signal de priorité présente la plus petite temporisation et qui possède ainsi la priorité d'accès à la ligne de données (SB-DATA), le transfert proprement dit des données étant réalisé dans une troisième phase.

2. Dispositif selon la revendication 1, caractérisé en ce que la ligne de données est constituée d'une ligne (SB-DATA) qui est reliée à une entrée de données (E3) et à une sortie de données (A3) du circuit logique (LS) par l'intermédiaire d'un troisième contrôleur de bus (BT3), l'entrée de données (E3) et la sortie de données (A3) étant respectivement reliées avec une entrée (IN) et une sortie (OUT) du composant d'interface d'entrée/sortie (IF), sous forme d'un composant d'interface série.

3. Dispositif selon la revendication 1 ou 2, caractérisé en ce que

— le circuit logique (LS) comporte un premier dispositif de porte (G1), par l'intermédiaire duquel la sortie de requête (A1) est reliée à la borne ($\overline{\text{RTS}}$) du composant d'interface série (IF) émettant la requête d'accès (BREQ), et la première entrée de lecture (E1) est reliée à une borne d'incrémentation (LOAD) du compteur (C), l'arrivée d'une ou de plusieurs requêtes d'accès simultanées (BREQ) provoquant un changement de signal de la première ligne (SB-BREQ) et des premières entrées de lecture (E1) et le compteur correspondant (C) étant incrémenté seul ou simultanément aux compteurs des autres circuits logiques ;

— le circuit logique (LS) comporte un second dispositif de porte (G2), par l'intermédiaire duquel une borne de report (RC) du compteur (C) est reliée à la sortie de priorité (A2), le report du compteur (C) présentant le nombre binaire le plus élevé provoquant un changement du signal de la sortie de priorité (A2) reliée au compteur correspondant (C), de la seconde ligne (SB-BAV) et des secondes entrées de lecture (E2) ;

— la seconde entrée de lecture (E2) est reliée à la borne d'incrémentation (LOAD) du compteur (C) par l'intermédiaire du premier dispositif de porte (G1), le changement du signal de la seconde entrée de lecture (E2) provoquant l'interruption de l'incrémentation du compteur (C) présentant le nombre binaire le plus faible par rapport aux autres compteurs, avant d'atteindre le report ; et

— la borne de report (RC) du compteur (C) est reliée à une entrée ($\overline{\text{CTS}}$) du composant d'interface série (IF) signalant la disponibilité de la ligne de données (SB-DATA), par l'intermédiaire du second dispositif de porte (G2), un changement de signal provoqué par une requête d'accès (BREQ) sur la première et la seconde lignes (SB-BREQ, SB-BAV) libérant l'accès à la ligne de données (SB-DATA) par l'intermédiaire de la sortie de données (A3).

# Fig.1

# Fig.3

# Fig.4

# Fig. 2